# EUROPÄISCHE PATENTSCHRIFT

(11) **EP 0 840 818 B1**
(45) Veröffentlichungstag und Bekanntmachung des Hinweises auf die Patenterteilung: **01.12.1999**
(21) Anmeldenummer: 96927015.6
(22) Anmeldetag: 16.07.1996
(51) Int. Cl.: D04H 11/00

(54) **FLOCK-PRÄPARATION**
FLOCK PREPARATION
PREPARATION POUR FLOCAGE

(30) Priorität: 25.07.1995 DE 19526969
(43) Veröffentlichungstag der Anmeldung: 13.05.1998
(73) Patentinhaber: Henkel Kommanditgesellschaft auf Aktien, 40589 Düsseldorf-Holthausen (DE)
(72) Erfinder: WEFRINGHAUS, Rainer, D-40723 Hilden (DE)
(86) Internationale Anmeldenummer: EP9603116
(87) Internationale Veröffentlichungsnummer: WO9705314

(56) Entgegenhaltungen:
- EP-A- 0 325 861
- EP-A- 0 488 560
- DE-A- 4 428 382
- US-A- 3 794 613
- US-A- 3 919 153
- US-A- 4 804 584

## Beschreibung

Die Erfindung betrifft eine Flock-Präparation, ihre Herstellung und Verwendung.

Unter einem Flock wird eine geschnittene oder gemahlene Spinnfaser mit einer Länge von 0,5 bis 10 mm verstanden, die zur Herstellung von Velours-, Samt- oder Flor-ähnlichen Oberflächen dient. Er wird in der Regel elektrostatisch auf ein Substrat aufgetragen, das mit einem Klebstoff beschichtet ist. Um diese Beflockung zu erleichtern, wird der Flock mit einer Präparation versehen.

Es ist bekannt, den Flock z.B. mit Phenoplasten, Gerbsäure-Triethanolamin-Kondensationsprodukten, verschiedenen Metallsalzen (Zirkonium-, Aluminium- und Titansalzen) und mit Schwermetallsalzen (Brechweinstein/Antimonsalzen) für die elektrostatische Beflockung zu präparieren. Weiterhin muß dafür gesorgt werden, daß der Flock immer die optimale "Restfeuchte" hat, da sonst keine Ausrichtung im elektrostatischen Feld möglich ist. Auch die Verarbeitungsräume müssen eine optimale Luftfeuchtigkeit von ca. 65 % relativer Luftfeuchtigkeit während des Beflockungsvorganges aufweisen.

Diese beiden Punkte führen zu häufig zu schlechten Beflockungsergebnissen, da hier sehr viele Fehlermöglichkeiten bei der Produktion vorhanden sind. So unterliegt die relative Luftfeuchtigkeit der klimatisierten Räume, in denen die Beflockung durchgeführt wird, sehr großen Schwankungen, wenn sich die Wetterlage ändert oder wenn durch einen Bedienungsfehler die Türen nicht korrekt geschlossen werden. Weiterhin muß der Flock konditioniert werden. Wenn er sich jedoch mehrere Stunden im Vorratsbehälter befindet, kann es zu einer Verschlechterung der Konditionierung kommen mit der Folge, daß eine einwandfreie Beflockung nicht mehr möglich ist.

Die erfindungsgemäße Aufgabe besteht darin, die Umstände für eine gleichmäßige Beflockung zu verbessern, insbesondere die Beflockung von Feuchtebedingungen unabhängiger zu machen.

Die erfindungsgemäße Lösung ist den Patentansprüche zu entnehmen. Sie besteht im wesentlichen darin, eine wäßrige Dispersion mit mindetens einem chlorierten Polyolefin aus der Gruppe der Homo- und Copolymere des Ethylens, Propylens und Butylens sowie des Vinylchlorids, die als Polymere noch chloriert wurden, als Flock-Präparation zu verwenden.

Bevorzugt sind chloriertes Polyethylen mit einem Chlor-Gehalt des Endproduktes von ca. 25 bis 50 Gew.-%, chloriertes Polypropylen mit einem Chlor-Gehalt von 10 bis 20 und chloriertes Polyvinylchlorid mit einem Chlor-Gehalt von ca. 60 bis 70 Gew.-%. Die chlorierten Polyolefine können im Gemisch eingesetzt werden, vorzugsweise bis zu 3 verschiedene Komponenten. Zweckmäßigerweise wird jedoch nur eine Komponente eingesetzt.

Zur Erhöhung der Hydrolysebeständigkeit des Flocks kann die Dispersion des chlorierten Polyolefins mit einer wäßrigen Dispersion eines wasseremulgierbaren Isocyantes gemischt werden. Es können auch mehrere Isocyanate eingesetzt werden, vorzugsweise bis zu drei.

Unter "wasseremulgierbaren Isocyanaten" sind vor allem folgende Polyisocyanate zu verstehen: Isocyanat-Biuret, PEG-modifiziertes Hexamethylendiisocyanat (BASF, Basonat) und Polyisocyanat auf Basis Hexamethylendiisocyanat (Bayer, Desmodur DA).

Die erfindungsgemäßen Flock-Präparationen haben einen Feststoffanteil von 1 bis 30, vorzugsweise von 10 bis 15 Gew.-%. Der Feststoffanteil wurde nach DIN 53189 bestimmt. Er gibt die Menge in % wieder, die bei einer Trocknung bei 105 °C bis zu Konstanz übrig bleiben.

Die chlorierten Polyolefine und die wasseremulgierbaren Isocyanate können in ihrem Gewichtsverhältnis in weiten Bereichen variieren. Vorzugsweise beträgt das Gewichtsverhältnis 1 : 0 bis 1 : 0,7, insbesondere von 1 : 0,1 bis 1 : 0,4.

Die Flock-Präparation kann noch weitere Bestandteile enthalten, um bestimmte Effekte zu erzielen.
Die Flock-Präparation kann auf verschiedenem Wege hergestellt werden. Vorzugsweise wird sie durch Mischen der wäßrigen Dispersion des chlorierten Polyolefins mit Wasser hergestellt.

Die erfindungsgemäße Flockpräparation wird in einer Menge von 0,1 bis 2,0 g Präparation/kg Flock aufgetragen.

Der Flock besteht in der Regel aus synthetischen Polymeren, z.B. Polyamid, Polyester und Polypropylen. Vor allem besteht er aus Polypropylen.

Das zu beflockende Substrat kann ein Gewebe, ein Papier, ein Kunststoff oder ein Metall sein, vorzugsweise ist es ein elastomerer Kunststoff, insbesondere Gummi.

Die erfindungsgemäße Flock-Präparation hat den Vorteil, daß ein damit präparierter Flock auch bei absoluter Trockenheit eine einwandfreie Beflockung, z.B. auf Gummi ergibt. Im Gegensatz dazu konnte ein mit einer herkömmlichen Präparation versehener Polyamidflock nicht mehr verarbeitet werden, wenn er bei 110 °C 30 Minuten lang getrocknet worden war.

Weitere Vorteile der erfindungsgemäßen Präparation sind: Die Leitfähigkeit des Flocks bleibt immer konstant und ist unabhängig von der Restfeuchte des Flocks, so daß auf eine Konditionierung verzichtet werden kann.
Beim Verarbeiten des Flocks (Beflockungsindustrie) kann auf die Verwendung von klimatisierten Räumen in der Beflockungslinie verzichtet werden und der überschüssige Flock kann mehrmals wieder verwendet werden.

Die unter Verwendung der erfindungsgemäßen Flock-Präparation hergestellten beflockten Gegenstände sind vielfach verwendbar. So können vor allem Profile aus Elastomeren beflockt werden, die in der Automobil-Industrie als Fensterschachtauskleidungen verwendet werden. Weiterhin können auch beflockte Matten oder beflockte biegsame Wellen, beflockte Fußbodenbeläge, beflockte Gummihandschuhe, Hafttafeln für Demonstrationszwecke, beflockte Putzwalzen für die Spinnereimaschinen-Industrie, Textilhülsen und ähnliches hergestellt werden.

Die Erfindung wird nun anhand von zwei Beispielen im einzelnen erläutert.

### Beispiel I

1.) Herstellung der Flock-Präparation
   Wäßrige Präparation für Flock-Fasern
   - Komponente A:: 20 % Trapylen 6966 W
   80 % Wasser dest.
   - Trapylen 6966 W:: wäßrige Dispersion von chlorierten Polyolefinen,
   Festgehalt: 22 %, ca. 0,7 % n-Butanol
   - Komponente B:: 100 % Basonat-F-DS 3425
   - Basonat-F-DS 3425:: Isocyanat-Biuret, auf Basis Hexamethylendiisocyanat, PEG-modifiziert
   - Mischungsverhältnis:: 100 Teile Komponente A
   3 Teile Komponente B
2.) Präparation des Flocks
   a) Polypropylen
   b) Polyamid
   c) Polyester

   Zunächst wurde das Präparationsbad (ca. 150 ml), bestehend aus den Komponenten A/B, hergestellt. Danach wurden jeweils ca. 30 g Flock (unvorbehandelt) in die Dispersion gegeben und ca. 2 min gerührt. Anschließend wurde der Flock über ein 50 um-Sieb abfiltriert und bis zur vollständigen Trockenheit bei ca. 100 °C getrocknet.
3.) Beflockung eines EPDM-Gummis mit den verschieden präparierten Flock-Sorten
   - Mischung:: EPDM-40468 (Henkel)
   - Verarbeitung:: Aufrauhen der Gummioberfläche,
   bestreichen mit Flocksil 1501 + 1 % Cuvertin K 3 (Henkel). Dabei handelt es sich um eine 10 %ige Dibutylzinndilaurat-Lösung in Xylol.
   Handbeflockung, Trocknung ca. 5 bei 140 °C.
4.) Beurteilung der Haftung: Meißeltest bestanden.
   Der Meißeltest besteht darin, daß man die Abriebfestigkeit der beflockten Oberfläche bestimmt (nach VW-Norm P 3313).

### Beispiel II

Die Flock-Präparation bestand lediglich in der Komponente A von Beispiel I. Der Flock wurde wie im Beispiel I präpariert und auf EPDM aufgetragen.

Die Beflockung war ohne Schwierigkeit möglich und führte zu einer guten Haftung (Der Meißeltest wurde bestanden).

## Patentansprüche

1. Flock-Präparation auf der Basis einer wäßrigen Dispersion mit mindestens einem chlorierten Polyolefin aus der Gruppe der Homo- und Copolymeren des Ethylens, Propylens, Butylens oder Vinylchlorids.

2. Flock-Präparation nach Anspruch 1, gekennzeichnet durch den Zusatz von mindestens einem wasseremulgierbaren Isocyanat.

3. Flock-Präparation nach einem der Ansprüche 1 bis 2, gekennzeichnet durch einen Feststoffanteil von 1 bis 30 Gew.-%, wobei das Gewichtsverhältnis von chlorierten Polyolefinen : wasseremulgierbaren Isocyanaten von 1 : 0 bis 1 : 0,7 variieren kann, vorzugsweise von 1 : 0,1 bis 1 : 0,4.

4. Verwendung der Flock-Präparation nach mindestens einem der Ansprüche 1 bis 3 in einer Auftragsmenge von 0,1 g Präparation/kg Flock zum Beflocken von Kunststoffen, insbesondere Elastomeren.

## Claims

1. A flock finish based on an aqueous dispersion containing at least one chlorinated polyolefin from the group of homopolymers and copolymers of ethylene, propylene, butylene or vinyl chloride.

2. A flock finish as claimed in claim 1, characterized by the addition of at least one water-emulsifiable isocyanate.

3. A flock finish as claimed in any of claims 1 to 2, characterized by a solids content of 1 to 30% by weight, the ratio by weight of chlorinated polyolefins to water-emulsifiable isocyanates being variable from 1:0 to 1:0.7 and preferably from 1:0.1 to 1:0.4.

4. The use of the flock finish claimed in at least one of claims 1 to 3 in a quantity of 0.1 g of finish/kg of flock for flocking plastics, more particularly elastomers.

## Revendications

1. Préparation de floc à base d'une dispersion aqueuse renfermant au moins une polyoléfine chlorée appartenant au groupe des homo- et des copolymères de l'éthylène, du propylène, du butylène ou du chlorure de vinyle.

2. Préparation de floc selon la revendication 1, caractérisée par l'adjonction d'au moins un isocyanate émulsionnable dans l'eau.

3. Préparation de floc selon une des revendications 1 à 2, caractérisée par une concentration en matières solides de 1 à 30 % en poids, dans laquelle le rapport pondéral entre les polyoléfines chlorées et les isocyanates émulsionnables dans l'eau peut varier entre 1:0 et 1:0,7, de préférence entre 1:0,1 et 1:0,4.

4. Utilisation de la préparation de floc selon au moins une des revendications 1 à 3 dans une quantité d'application de 0,1 g de préparation par kg de floc, pour le flocage de matières synthétiques, en particulier d'élastomères.
